# EUROPEAN PATENT APPLICATION

(11) **EP 3 150 440 A1**
(43) Date of publication of application: **05.04.2017**
(21) Application number: 15800061.2
(22) Date of filing: 21.05.2015
(51) Int. Cl.: B60R 11/02, B60R 1/00, B60R 1/04

(54) **IN-VEHICLE DISPLAY DEVICE, IN-VEHICLE DISPLAY DEVICE CONTROL METHOD, AND PROGRAM**

(30) Priority: 26.05.2014 JP 2014107752
(71) Applicant: Panasonic Intellectual Property Management Co., Ltd., Osaka-shi, Osaka 570-6207 (JP)
(72) Inventor: KUWABARA, Takashi, Osaka 540-6207 (JP); AKAHORI, Hitoaki, Osaka 540-6207 (JP); MORISHITA, Kazuhiro, Osaka 540-6207 (JP); SUENAGA, Terumitsu, Osaka 540-6207 (JP)
(74) Representative: Schwabe - Sandmair - Marx
(86) International application number: PCT/JP2015/002558
(87) International publication number: WO 2015/182080

(57) **Abstract**

An in-vehicle display apparatus has a display unit mounted on a mounting position of a rearview mirror in a vehicle cabin of a vehicle. The display unit includes an image displaying unit that displays an image taken by an imager mounted to the vehicle, and a half mirror disposed in front of the image displaying unit. The display unit changes an image to be displayed according to a lighting state of an interior lamp.

## Description

### TECHNICAL FIELD

The present invention relates to an in-vehicle display apparatus for presenting to a driver of the vehicle an image that is taken by a camera mounted to the vehicle.

### BACKGROUND ART

In recent years, a kind of in-vehicle display apparatuses have been becoming popular. Such an apparatus processes an image taken by a camera mounted to a vehicle and presents the processed image to a driver for assisting driving.

There is known a conventional in-vehicle display apparatus that has an image displaying unit mounted in a body of a rearview mirror of an automobile and covered by a half mirror, and displays on the image displaying unit an image taken by a camera mounted to the automobile (see, for example, PTL 1).

Also, there is known another in-vehicle display apparatus (a rearview apparatus) that uses a half mirror, and prevents reflection of a rear seat display in the half mirror to assure visibility of the rear view. This in-vehicle display apparatus switches the display thereon from a display provided by the half mirror to a display provided by an image displaying unit when the rear seat display is used(see, for example, PTL 2).

### Citation List

### Patent Literature

PTL 1: Unexamined Japanese Patent Publication No. H11-078693
PTL 2: Unexamined Japanese Patent Publication No. H11-291817

### SUMMARY OF THE INVENTION

The present invention provides an in-vehicle display apparatus that is capable of preventing reduction of visibility which would otherwise be caused by light of a vehicle interior lamp.

An in-vehicle display apparatus of the present invention has a display unit which is mounted on a mounting position of a rearview mirror in an interior of a vehicle. The display unit includes an image displaying unit that display an image taken by an imager mounted to the vehicle, and a half mirror disposed in front of the image displaying unit. The display unit changes an image to be displayed according to a lighting state of an interior lamp.

Here, the change of the image to be displayed may include a change from a display provided by the half mirror to a display provided by the image displaying unit, a change from a display provided by the image displaying unit to a display provided by the half mirror, and a change of an image to be displayed by the image displaying unit.

The present invention makes it possible to provide an in-vehicle display apparatus that is capable of preventing reduction of visibility which would otherwise be caused by light of the interior lamp.

### BRIEF DESCRIPTION OF DRAWINGS

FIG. 1 is a block diagram illustrating a configuration of an in-vehicle display apparatus in accordance with an exemplary embodiment of the present invention.
FIG. 2 is a flowchart illustrating an example of operation of the in-vehicle display apparatus in accordance with the exemplary embodiment of the present invention.
FIG. 3 is a diagram illustrating an example of displayed image on a display unit provided by a half mirror in accordance with the exemplary embodiment of the present invention.
FIG. 4 is a diagram illustrating an example of displayed image on the display unit provided by a display device in accordance with the exemplary embodiment of the present invention.
FIG. 5 is a diagram illustrating an example of displayed composite image on the display unit, of a displayed image provided by the half mirror and a displayed image provided by the display device in accordance with the exemplary embodiment of the present invention.

### DESCRIPTION OF EMBODIMENTS

Prior to describing an exemplary embodiment of the present invention, a problem of the conventional in-vehicle display apparatus will be briefly described. The half mirror disposed on the front surface of the image displaying unit of the in-vehicle display apparatus is more likely to be influenced by the interior lamp than the ordinary mirrors. Therefore, it is necessary for ensuring visibility of the in-vehicle display apparatus using a half mirror to consider the light of the interior lamp. However, the reduction of visibility by the light of the interior lamp is not considered in the conventional in-vehicle display apparatus.

Hereinafter, an exemplary embodiment of the present invention will be described with reference to the accompanying drawings. The exemplary embodiment described hereinafter is a preferable specific example of the present invention. Numerical values, shapes, components, and arrangement and connection configuration of the components are merely examples, and are not intended to limit the present invention.

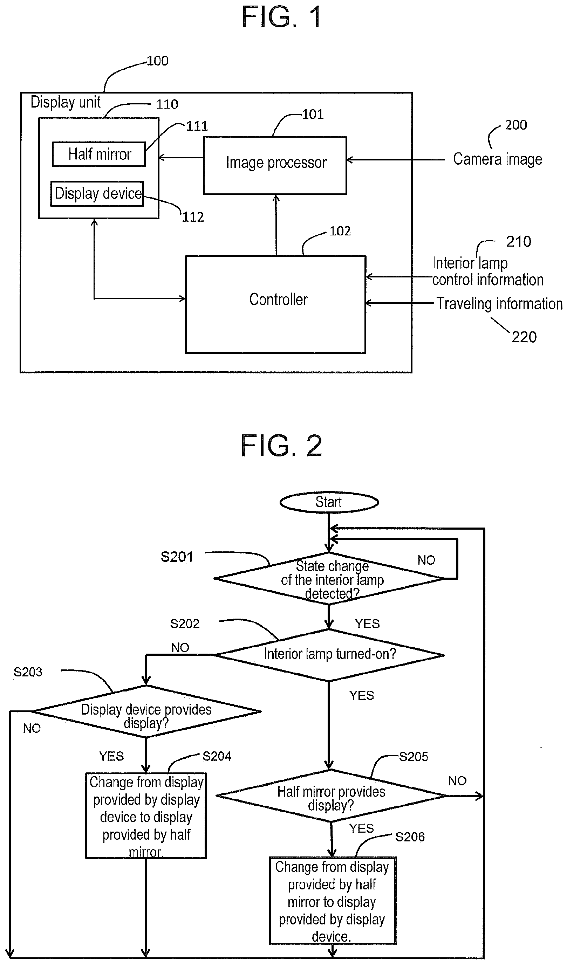

FIG. 1 is a block diagram illustrating a configuration of in-vehicle display apparatus 100 in accordance with an exemplary embodiment of the present invention. In-vehicle display apparatus 100 has display unit 110, image processor 101, and controller 102.

Display unit 110 is mounted on a mounting position of a rearview mirror in an interior of a vehicle with a mounting member or the like. Display unit 110 has half mirror 111, and display device 112 which is an image displaying unit disposed behind half mirror 111 with respect to the driver's seat. Display device 112 has almost the same size as that of half mirror 111, and is covered with half mirror 111.

Half mirror 111 is transparent with respect to a portion of display device 112 in which the screen brightness is high, so that an image displayed on display device 112 transmits through half mirror 111, and is displayed on display unit 110.

Half mirror 111 acts as a mirror with respect to a portion of display device 112 in which the screen brightness is low.

Image processor 101 receives camera image 200 taken by an imager (not shown in the figure) mounted to the vehicle, and processes the received image to produce an image that can be displayed by display device 112. Image processor 101 processes camera image 200, which is an outside view image taken by the imager mounted to the vehicle, to transform the view point of the image so as to coincide with the view point of the image viewed by the rearview mirror. Image processor 101 superimposes another image upon camera image 200 to produce an image to be displayed by display device 112.

Controller 102 controls the entirety of in-vehicle display apparatus 100. Controller 102 includes a central processing unit (CPU) that controls operations, a read only memory (ROM) that stores a control program, a random access memory (RAM) that stores temporary holding data and control data, a system clock that is used to measure time, and a timer that is used to measure time intervals.

Controller 102 is connected to a controller area network (CAN). The CAN is connected to various electronic control units (ECUs) including, for example, an engine electronic control unit (an engine ECU). Controller 102 acquires interior lamp control information 210 and vehicle traveling information 220 via the CAN. Interior lamp control information 210 is a control signal for controlling the interior lamp, including, for example, turning on and turning off the interior lamp. Traveling information 220 is information concerning traveling of the vehicle, including information indicating whether or not the vehicle is traveling.

Controller 102 controls a display on display unit 110 based on interior lamp control information 210 and traveling information 220. Controller 102 changes a display on display unit 110 from a display provided by half mirror 111 to a display provided by display device 112, or from a display provided by display device 112 to a display provided by half mirror 111, based on interior lamp control information 210 and traveling information 220.

An example of major operations of in-vehicle display apparatus 100 configured as above will be described hereinafter with reference to the drawings.

FIG. 2 is a flowchart illustrating an example of operation of in-vehicle display apparatus 100 when a vehicle equipped with in-vehicle display apparatus 100 is traveling.

Controller 102 starts the operation shown in FIG. 2 when controller 102 detects a start of traveling of the vehicle based on traveling information 220. Controller 102 ends the operation shown in FIG. 2 when controller 102 detects a stop of the vehicle based on traveling information 220.

Controller 102 detects a state change of an interior lamp based on interior lamp control information 210 (step S201). In a case where controller 102 detects a state change of the interior lamp (in a case of YES in step S201), controller 102 determines whether or not the interior lamp is turned on based on interior lamp control information 210 (step S202).

In a case where controller 102 determines that the interior lamp is turned on (in a case of YES in step S202), controller 110 then determines whether or not the display on display unit 110 is a display provided by half mirror 111 (step S205). In a case where the display on display unit 110 is provided by half mirror 111 (in a case of YES in step S205), controller 102 changes the display on display unit 110 from the image provided by half mirror 111 to a display provided by display device 112 (step S206).

Specifically, image processor 101 superimposes an image indicating that the interior lamp is on (in a lit state) upon camera image 200 to produce an image to be displayed, and display device 112 displays the produced image. The image displayed on display device 112 increases the brightness of display device 112, which causes half mirror 111 to be transparent, so that the image displayed on display device 112 is transmitted through half mirror 111 to be displayed on display unit 110.

In a case where controller 102 determines that the state change of the interior lamp is not a turn-on of the interior lamp in step S202 (in a case of NO in step S202), controller 102 determines whether or not the display on display unit 110 is a display provided by display device 112 (step S203). In a case where the display on display unit 110 is provided by display device 112 (in a case of YES in step S203), controller 102 changes the display on display unit 110 from the image provided by display device 112 to a display provided by half mirror 111 (step S204).

Specifically, controller 102 turns off a power source (not shown in the figure) of display device 112. As a result, the brightness of display device 112 becomes zero, so that half mirror 111 acts as a mirror.

The operation process returns to step S201 to repeat the steps in and after step S201 in either one of following cases: any state change of the interior lamp is not detected in step S201 (in a case of NO in step S201); the display on display unit 110 is not provided by display device 112 in step S203 (in a case of NO in step S203); the display on display unit 110 is not provided by half mirror 111 in step S205 (in a case of NO in step S205); and the processing in step S204 or step S206 is completed.

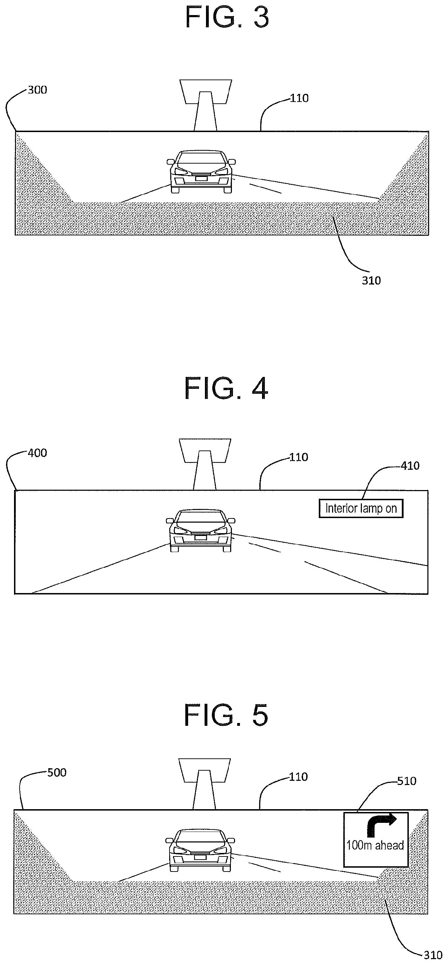

FIG. 3 is a diagram illustrating an example of displayed image on display unit 110 provided by half mirror 111. Displayed image 300 contains image 310 in the interior of the vehicle.

FIG. 4 is a diagram illustrating an example of displayed image on display unit 110 provided by display device 112. In displayed image 400, image 410 indicating that the interior lamp is ON is superimposed on the camera image.

In the in-vehicle display apparatus according to the present exemplary embodiment, as described above, in a case where the interior lamp is turned on when the vehicle is traveling, the display on display unit 110 is changed from a display provided by half mirror 111 to a display provided by display device 112. In a case where the interior lamp is turned off when the vehicle is traveling, the display on display unit 110 is changed from a display provided by display device 112 to a display provided by half mirror 111.

According to the present exemplary embodiment, it is possible to provide in-vehicle display apparatus 100 that is capable of preventing reduction of visibility which would otherwise be caused by the light of the interior lamp when the vehicle is traveling.

In the above description, the display on display unit 110 is controlled to be a display provided by display device 112 when the interior lamp is on and a display provided by half mirror 111 when the interior lamp is off (in the unlit state). However, the image displayed by display device 112 may be changed depending on whether the interior lamp is on or off.

For example, when the interior lamp is on, display device 112 may display an image in which an image indicating that the interior lamp is ON is superimposed on the camera image as shown in FIG. 4. On the other hand, when the interior lamp is off, display device 112 may display, as a part of an image to be displayed, an image showing route guide information which is produced by image processor 101 based on navigation information acquired by controller 102 via the CAN.

FIG. 5 is a diagram illustrating an example of displayed image on display unit 110 in such a configuration that display device 112 displays, when the interior lamp is off, an image which is different from an image displayed when the interior lamp is on. FIG. 5 shows an example of displayed composite image of a displayed image provided by half mirror 111 and a displayed image provided by display device 112.

Displayed image 500 is a displayed image on display unit 110 when the interior lamp is off. Displayed image 500 is a composite image of a displayed image provided by half mirror 111 and displayed image 510 provided by display device 112.

As shown in FIG. 5, in-vehicle display apparatus 100 that is capable of preventing reduction of visibility which would otherwise be caused by the light of the interior lamp can be provided by changing the displayed image provided by display device 112 depending on whether the interior lamp is on or off.

In the above description, the states of the interior lamp are the lit state and the unlit state. Alternatively, the display on display unit 110 may be controlled based on the brightness level of the interior lamp. Further, the display on display unit 110 may be controlled considering the position of the interior lamp, for example, whether the interior lamp is in a front part, a middle part or a rear part of the vehicle cabin.

In-vehicle display apparatus 100 in accordance with the present exemplary embodiment may be implemented by a dedicated hardware, or may be realized by storing a program for realizing its functions in a computer readable storage medium, loading the program stored in the storage medium into a computer system, and executing the loaded program by the computer system.

### INDUSTRIAL APPLICABILITY

The in-vehicle display apparatus of the present invention is useful as an electronic mirror.

### REFERENCE MARKS IN THE DRAWINGS

- 100: in-vehicle display apparatus
- 101: image processor
- 102: controller
- 110: display unit
- 111: half mirror
- 112: display device
- 200: camera image
- 210: interior lamp control information
- 220: traveling information
- 310, 410: image
- 300, 400, 500, 510: displayed image

## Claims

1. An in-vehicle display apparatus comprising a display unit mounted on a mounting position of a rearview mirror in an interior of a vehicle, and includes:
an image displaying unit that displays an image taken by an imager mounted to the vehicle; and
a half mirror disposed in front of the image displaying unit,
wherein the display unit changes an image to be displayed according to a lighting state of an interior lamp.

2. The in-vehicle display apparatus according to claim 1,
wherein the display unit changes the image to be displayed from an image display provided by the half mirror to a display provided by the image displaying unit, when the interior lamp is turned on.

3. The in-vehicle display apparatus according to claim 1 or 2,
wherein the display unit changes the image to be displayed from a display provided by the image displaying unit to a display provided by the half mirror, when the interior lamp is turned off.

4. The in-vehicle display apparatus according to claim 1,
wherein the display unit changes an image to be displayed by the image displaying unit depending on whether the interior lamp is on or off.

5. An in-vehicle display apparatus comprising:
a display unit which is mounted on a mounting position of a rearview mirror in an interior of a vehicle, and includes an image displaying unit that displays an image taken by an imager mounted to the vehicle, and a half mirror disposed in front of the image displaying unit; and
a controller that controls the display unit based on a lighting state of an interior lamp,
wherein the controller causes the display unit to change an image to be displayed by the display unit according to the lighting state of the interior lamp.

6. The in-vehicle display apparatus according to claim 5,
wherein the controller causes the display unit to change a display on the display unit from a display provided by the half mirror to a display provided by the image displaying unit, when the interior lamp is turned on.

7. The in-vehicle display apparatus according to claim 5 or 6,
wherein the controller causes the display unit to change a display on the display unit from a display provided by the image displaying unit to a display provided by the half mirror, when the interior lamp is turned off.

8. The in-vehicle display apparatus according to claim 5,
wherein the controller causes the display unit to change an image to be displayed by the image displaying unit depending on whether the interior lamp is on or off.

9. A control method for controlling an in-vehicle display apparatus having a display unit which is mounted on a mounting position of a rearview mirror in an interior of a vehicle, and includes: an image displaying unit that displays an image taken by an imager mounted to the vehicle; and a half mirror disposed in front of the image displaying unit, the control method comprising:
detecting a lighting state of an interior lamp; and
changing an image to be displayed by the display unit according to the lighting state of the interior lamp.

10. The control method according to claim 9, comprising:
changing a display on the display unit from a display provided by the image displaying unit to a display provided by the half mirror, when the interior lamp is turned off; and
changing the display on the display unit from a display provided by the half mirror to a display provided by the image displaying unit, when the interior lamp is turned on.

11. A program for causing a computer to execute the control method according to claim 9.
